(19) Europäisches Patentamt
European Patent Office
Office européen des brevets

(11) **EP 3 065 502 A1**

(12) **EUROPEAN PATENT APPLICATION**

(43) Date of publication:
**07.09.2016 Bulletin 2016/36**

(51) Int Cl.:
***H04W 88/10*** *(2009.01)*

(21) Application number: **15290055.1**

(22) Date of filing: **03.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Olaziregi, Nikolas**
**2018 Antwerpen (BE)**

• **Kozicki, Bartlomiej**
**2018 Antwerpen (BE)**
• **Tang, Siyu**
**2018 Antwerpen (BE)**
• **Borghs, Eric Frans Elisa**
**2018 Antwerpen (BE)**

(74) Representative: **Plas, Axel Ivo Michel**
**IP HILLS NV**
**Hubert Frère-Orbanlaan 329**
**9000 Gent (BE)**

(54) **ACCESS NODE DEVICE FOR MANAGING UPSTREAM NETWORK TRAFFIC**

(57) According to a first aspect, the invention relates to an access node device (1) for managing upstream network traffic. The device (1) comprises one or more wireline and/or wireless access line interfaces (10,11) for receiving resources from active wireline users (7) and wireless users (8). The access node device (1) further comprises a traffic prediction module adapted to predict upstream traffic pattern for the active wireline users (7) and wireless users (8). The access node device further comprises a resource usage module configured to detect insufficient link capacity for forwarding the received resources. The access node device (1) further comprises a dynamic resources scheduler adapted to adjust upstream traffic when insufficient link capacity is detected by the resource usage module. The upstream traffic is adjusted by allocating a substantially equal share of link capacity to the active wireline users (7) and wireless users (8) based on the predicted upstream traffic pattern.

Fig. 1

## Description

## Technical Field

The present disclosure generally relates to the field of managing upstream network traffic. More particular, the disclosure relates to an access node device for managing upstream network traffic for wireline and wireless users.

## Background

As an increased amount of people are accessing wireless networks, a larger number of wireless access points (APs) or customer premises equipment (CPEs) is provided and used to access networks. Wireless access points allow wireless computing devices to connect to the network. Exemplary technology for such wireless networks concern Wi-Fi® networks, which can be implemented in e.g. a business, home or school environment.

In recent times a significant offer of public commercial hotspot connectivity has become a reality. Technology advances in hotspot wireless access throughput as well as the vast spread among portable devices of all kinds. In addition to the advent of Carrier Wi-Fi, seamless access and authentication methods with policy control has proven a compelling proposition to adopt Wi-Fi as the technology of choice to access the network. Current usage statistics show that more than two thirds -and growing- of wireless traffic is over Wi-Fi. As a result, increasingly nomadic consumers expect broadband connectivity wherever they take time to concentrate, on all their devices.

Wi-Fi connections often lack the required scale capabilities to combat congestion either over the air interface or access node (AN). This scalability becomes one of the main obstacles in ensuring Quality of Experience (QoE) for end users. Degradation of QoE when camping in a crowded access point is a well-known characteristic. Often the bottleneck is localized in the backhaul link.

A first existing solution for the upstream traffic is to assume that the network interfacing capacity is never blocking in the uplink, despite overbooking.

A second alternative simple solution could be based on the addition of bandwidth to congested links. However, the sporadic full usage of the over-provisioned capacity may not justify the business case.

## Summary

Existing solutions do not provide any means to take into account the amount of subscribers connected to an access line, and hence offer little adaptation flexibility with respect to changing requirements, in particular for nomadic use cases. In current use cases, high social and cloud networking factors with varying down/upstream ratio requirements are introduced to network traffic. As a result, wireless users (e.g. Wi-Fi users) obtain insufficient resources from the access node of a network.

It is an object to provide an improved access node for managing upstream network traffic. This object is achieved by an access node device for managing upstream network traffic. The device comprises one or more wireline and/or wireless access line interfaces for receiving resources from active wireline users and wireless users. The access node device further comprises a traffic prediction module adapted to predict upstream traffic pattern for the active wireline users and wireless users. The access node device further comprises a resource usage module configured to detect insufficient link capacity for forwarding the received resources. The access node device further comprises a dynamic resource scheduler adapted to adjust upstream traffic when insufficient link capacity is detected by the resource usage module. The upstream traffic is adjusted by allocating a substantially equal share of link capacity to the active wireline users and wireless users based on the predicted upstream traffic pattern.

The solution is to manage (i.e. differentiate) traffic based on the amount of active users connected to the access lines instead of the amount of access lines, when there is insufficient link capacity. This leads to a better and more 'fair' quality of experience (QoE) for the active wireline as wireless users connected to the network.

The term "access node device" in underlying disclosure should be understood as a computing device or computer which is provided with a network interface for communicating via one or more other network edge devices to a network. Possible implementations of the access node device could comprise a computer, a server, a router, a switch, a modem, a portable device, a tablet computer, etc. Alternatively, the term access node device should also be understood as a computing system or a cloud system, possibly comprising features in a distributed way.

According to an embodiment, the upstream traffic pattern corresponds to the amount of active wireline users and the amount of wireless users.

The equal share of link capacity is based on the amount of active wireline users and the amount of wireless users. As in current use cases with high social and cloud networking, upstream traffic per individual user will be optimized.

According to an embodiment, the upstream traffic pattern corresponds to requested bit-rates per individual user.

The equal share of link capacity is based on requested bit-rates per individual user. As in current use cases with high social and cloud networking, upstream traffic per individual user will be optimized.

According to an embodiment, the upstream traffic pattern corresponds to average requested bit-rates per individual user during a predetermined time interval.

By averaging the traffic pattern over a time interval, system stability improves by reducing frequent rescheduling of network resource.

According to an embodiment, the resource usage module is configured to detect insufficient link capacity for the access node device based on the predicted and/or current upstream traffic pattern for the active wireline users and wireless users.

If the predicted and/or current upstream traffic pattern would not be feasible in view of the total available link capacity, the upstream traffic can be adjusted by the dynamic resource scheduler.

According to an embodiment, in case of sufficient link capacity, the dynamic resource scheduler is configured to grant bit-rate requests from users.

Granting all incoming bit-rate requests when sufficient link capacity, avoids needless limitation of upstream network traffic.

According to an embodiment, the dynamic resource scheduler is adapted to forward traffic from wireline users and wireless users via separate queues, wherein a queue weight $W_{WLN}$ is assigned for the queues corresponding to wireline traffic and wherein a queue weight $W_{WLS}$ is assigned for the queues corresponding to wireless traffic.

According to an embodiment, the dynamic resource scheduler is adapted to forward traffic from wireline users and wireless users via one or more pairs of separate queues, wherein each pair corresponds to a service class and wherein a queue weight $W_{WLN}$ is assigned for the first queue of a pair corresponding to wireline traffic, and wherein a queue weight $W_{WLS}$ is assigned for the second queue of a pair corresponding to wireless traffic.

According to an embodiment, the $W_{WLN}$ weight is determined based on the ratio between the amount of active wireline users and the total amount of active users, and wherein the $W_{WLS}$ weight is determined based on the ratio between the amount of active wireless users and the total amount of active users.

According to an embodiment, the $W_{WLN}$ weight is determined based on the ratio between the bit-rate requested by the active wireline users and the total bit-rate requested by the active users, and wherein the $W_{WLS}$ weight is determined based on the ratio between the bit-rate requested by the active wireless users and the total bit-rate requested by the active users.

According to an embodiment, the dynamic resource scheduler is adapted to impose per physical port a traffic limit substantially equal to the product of the amount of active users connected to the corresponding physical port with the ratio between the total link capacity and the total amount of active users.

In case of insufficient link capacity, the imposing of a traffic limit per physical port based on the amount of active users, will optimize the upstream traffic distribution.

According to an embodiment, the dynamic resource scheduler is adapted to impose per logical port a traffic limit substantially equal to the ratio between the total link capacity and the total amount of active users.

In case of insufficient link capacity, the imposing of a traffic limit per logical port based on the amount of active users, will optimize the upstream traffic distribution.

According to an embodiment, the wireline users are connected to the AN device via a CPE.

According to an embodiment, the wireless users are connected to the AN device via an AP and a CPE.

In a second aspect, the disclosure concerns a method for managing upstream network traffic, the method comprising:

- receiving resources from active wireline users and wireless users;
- predict upstream traffic pattern for the active wireline users and wireless users;
- detect insufficient link capacity for forwarding the received resources; and
- adjust upstream traffic when insufficient link capacity is detected by allocating a substantially equal share of link capacity to the active wireline users and wireless users based on the predicted upstream traffic pattern.

**Brief Description of the Drawings**

Fig. 1 shows a block diagram of a modified AN system, according to an embodiment of underlying disclosure.

Fig. 2 shows a block diagram of a Universal Remote (UR) system, according to an embodiment of underlying disclosure.

Fig. 3 shows a schematic view of a connection of wireline and wireless users with an access node device, according to an embodiment of underlying disclosure.

Fig. 4 illustrates weighted fair queuing of traffic, according to an embodiment of underlying disclosure.

Fig. 5 shows a flow chart of traffic handling by an access node device, according to an embodiment of underlying disclosure.

Fig. 6 shows a graph illustrating throughput of wireline and wireless users, according to an embodiment of underlying disclosure.

Fig. 7 shows a flow chart of traffic handling by an access node device, according to an embodiment of underlying disclosure.

## Detailed Description of Embodiment(s)

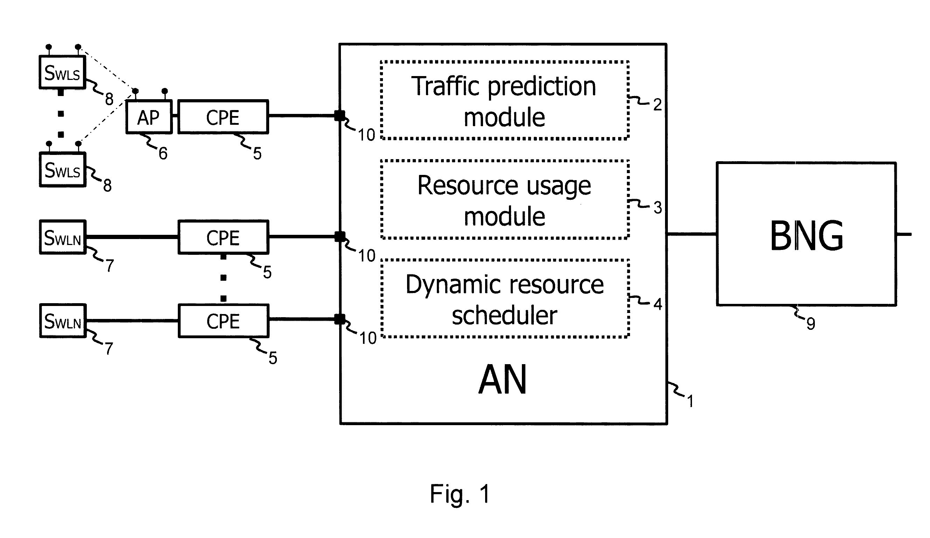

Fig. 1 shows a block diagram of a modified AN system comprising an access node device (1), according to an embodiment of underlying disclosure. The AN device (1) implements a fluid and dynamic real time adjustment of the rate at which upstream traffic is expedited by differentiating access line ports (10) connecting wireline subscribers $S_{WLN}$ (7), from access line ports (10) connecting wireless subscribers $S_{WLS}$ (8).

The AN device (1) concerns a classic AN implementing wireline interfaces (10) through which resources are received from wireline users (7) via so-called Customer Premises Equipment (CPE) (5) and from wireless users (8) via a Wi-Fi AP (6) and a CPE (5).

The access node device (1) comprises a traffic prediction module (2) which is configured to estimate the number of active wireless users (8) and wireline users (7) that are competing for the network resource. Alternatively or in addition, the bit-rate requested by individual users (7,8) is also predicted. In most of the cases, it is also preferred to estimate the arrival pattern of future traffic, i.e. number of active wireless and wireline users during certain time interval in the future, associated with their bit-rate demands. Hereby, the system stability improves by reducing frequent rescheduling of network resource.

Several mechanisms can provide the means to allow the AN to obtain information on the amount of subscribers connected to a Wi-Fi AP, either autonomously or in collaboration with the network edge node, e.g. a broadband network gateway (BNG) (9). The mechanisms range from sniffing or tracing several protocols used for Wi-Fi control processes e.g. RADIUS, DHCP, Inter-Access Point Protocol (IAPP), Data-Triggered Mobility (DTM), etc. The AN device (1) could for example implement a 'RADIUS sniffer' (cfr. traffic prediction module (2)). Hereby, authentication messages could be captured and thus delimit the wireless users associated to the AP (6). Alternatively, and hereby creating a dependency on the BNG (9), the latter (9) could inform the AN (1) of such events when the BNG (9) incorporates a 'RADIUS client'.

The AN device (1) further comprises a resource usage module (3), which is configured to detect whether the access network is congested or not, given the current and/or predicted traffic pattern from the traffic prediction module (2).

If not, all incoming bit rate requests from users (7,8) are granted. If so, a dynamic resource scheduler (4) of the AN device (1) can adjust upstream traffic by allocating a substantially equal share of link capacity to the active wireline users (7) and wireless users (8) based on the predicted upstream traffic pattern.

The dynamic resource scheduler (4) is invoked if there is insufficient link capacity to accommodate all incoming requests (or prediction of the incoming requests). This module (4) schedules network resources in a fair and dynamic way so as to provide equal treatment of both wireline users (7) and wireless users (8). Upon the detection of any drastic changes in the incoming traffic pattern (or the prediction of the incoming traffic pattern), the dynamic resource scheduler (4) is invoked.

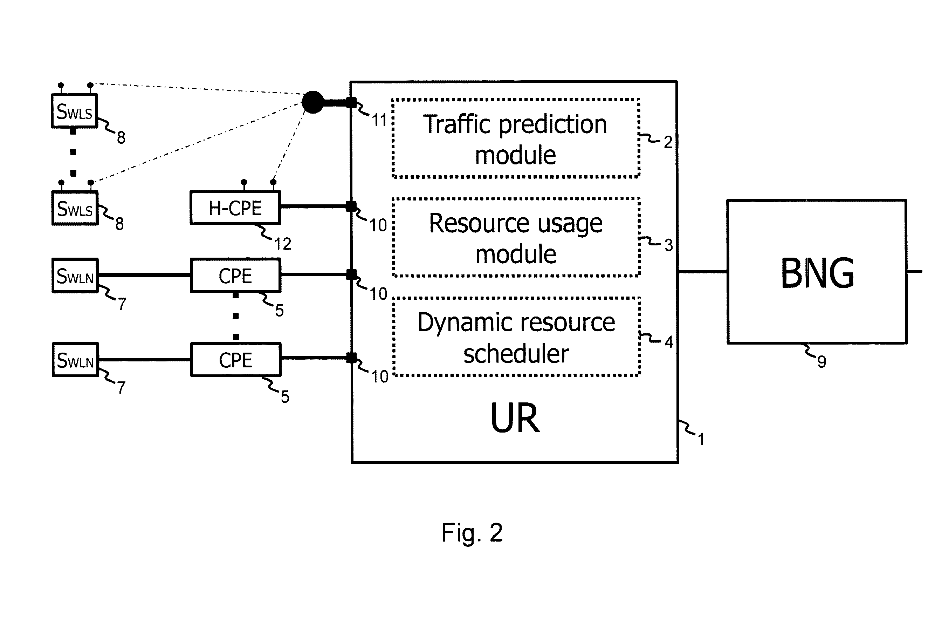

Fig. 2 shows a block diagram of a Universal Remote (UR) system, according to an embodiment of underlying disclosure. The UR system (1) comprises the same functional features as referenced in Fig. 1. Further, the UR or AN (1) implements both wireless interfaces (11) and a wireline interface (10). This advanced AN (1) is known as Universal Remote (UR). A potential scenario use case of UR introduces the possibility of boosting a wireline subscriber's throughput by bonding the wireline connection and the wireless connection enabled by a Hybrid Customer Premises Equipment or H-CPE (12), as shown in Figure 2.

As for the AN system in Fig. 1, the aim is to ensure equal treatment of individual subscribers (7,8) in the condition of congestion regardless of whether they connect though wireless interface (11) or wireline interface (10).

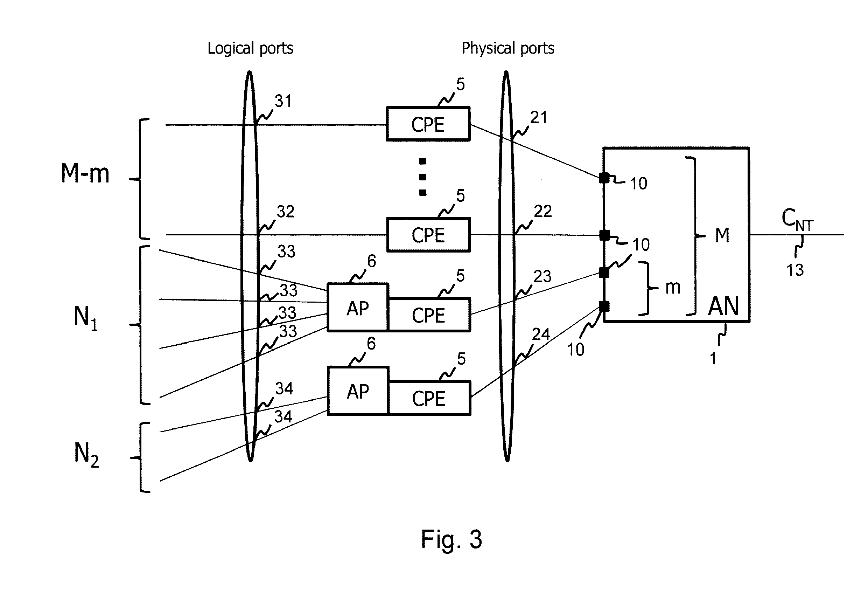

Fig. 3 shows a schematic view of a possible connection of wireline users (7) and wireless users (8) with an access node device (1) as in Fig. 1, according to an embodiment of underlying disclosure.

In Figure 3, multiple wireless users (8) are connected through logical wireless ports (33,34) to the Wi-Fi AP (6), where each Wi-Fi AP is connected to the AN (1) via a physical interface (10). Likewise, a wireline user (7) is connected to the CPE (5) through a logical port (31,32), with the CPE (5) connecting to the AN device (1) through a physical port (21,22). Among the M active physical ports (21,22) on the AN device (1), m ports (23,24) are used to serve APs (wireless users), with the remaining M-m ports (21,22) configured for wireline users (7). Both values are assumed to be known through the configuration of the AN device (1). Say that there are $N_i$ wireless users (estimated from the traffic prediction module (2)) connected to an AP (6) and to one physical port (23,24) on the AN (wherein $1 \leq i \leq m$). It is possible that the number of wireless users $N_i$ connected to each AP (6) corresponding with a physical port i (23,24) are different. The number of wireline users (7) connected to the AN (1) is consequently, M-m. The AN device (1) forwards traffic via connection (13) with link capacity $C_{NT}$, e.g. a 10 Gb Ethernet connection.

## Embodiment 1

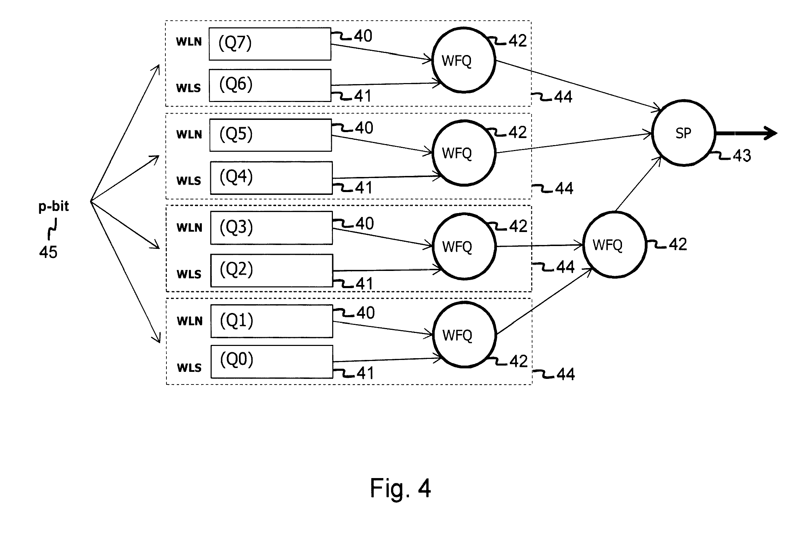

Fig. 4 illustrates weighted fair queuing of traffic in e.g. an AN system (1) of Fig. 3, according to an embodiment of underlying disclosure.

The dynamic resource scheduler (4) is adapted to forward traffic from wireline users (7) and wireless users (8) via separate parallel queues (40,41) within a same traffic class (44), wherein a queue weight $W_{WLN}$ is assigned for the queues (40) corresponding to wireline traffic and wherein a queue weight $W_{WLS}$ is assigned for the queues (41) corresponding to wireless traffic.

The queue structure is shown in Figure 4 with the assumption of mapping QoS classes to 4 queues. For each service class (44) determined by the p-bit value (45), the queues (40,41) are separated to ingest traffic from the wireline logical ports (31,32) and the wireless logical ports (33,34).

The traffic in each class (44) is arbitrated between the 'wireline' (WLN) queues (40) and 'wireless' (WLS) queues (41) by means of a scheduler (42) implementing the Weighted Fair Queuing (WFQ) algorithm. The adjustment between traffic ingest comes from modifying the weights ($W_{WLN}$, $W_{WLS}$) of the scheduler between the 'wireline' and 'wireless' input.

While there is sufficient link capacity, requested bit-rates ($r_i$) are granted to each logical port (31-34). But when overbooking results in insufficient link capacity to accommodate the requested bit-rates ($r_i$), an ideal weight assignment for each queue is determined.

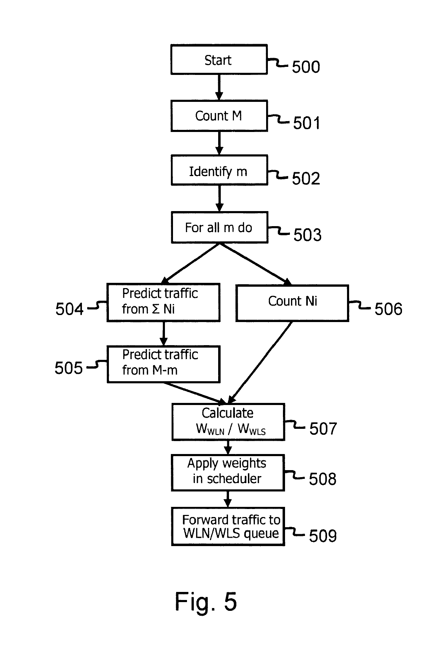

Fig. 5 shows a flow chart of traffic handling by the access node device (1) of the embodiment in Fig. 4. The first steps concern the start of traffic handling (step 500), counting M (step 501) and identifying m (step 502). For all m ports the following is done (step 503): wireless traffic is predicted (step 504), wireline traffic is predicted (step 505) and $N_i$ is counted (step 506). Subsequently the weights are calculated (step 507) and applied in the scheduler (step 508) in order to forward the traffic in step 509. In the following, two possible scenarios are discussed.

**Worst-case scenario:**

In case of greedy flow at each competing source, subscribers are requesting more than the equal share of what they can get. The inflexion point is reached when:

$$r_0 = \left. C_{NT} \middle/ \left( M - m + \sum_{i=1}^{m} N_i \right) \right.$$

Herein, ro denotes the equal share of the total link capacity $C_{NT}$ for the wireless users (8) and wireline users (7). The requirement for an ideal weight assignment is achieved under the premise of fairness allocation of resources between wireline and wireless traffic per service class (44) in the following manner:

$$W_{WLS} = \left. \left( \sum_{i=1}^{m} N_i \right) \middle/ \left( M - m + \sum_{i=1}^{m} N_i \right) \right.$$

$$W_{WLN} = \left. (M - m) \middle/ \left( M - m + \sum_{i=1}^{m} N_i \right) \right.$$

Obeying $W_{WLN} + W_{WLS} = 1$, where $W_{WLS}$ is the weight associated to traffic originating from 'wireless' ports, while $W_{WLN}$ is the weight associated to traffic originating from 'wireline' ports. Let $C_{AP}(i)$ be the physical link capacity of the AP. The aggregated bit-rate of the $N_i$ wireless users on the i-th port cannot exceed the $C_{AP}(i)$, consequently, leading to the upper bound of the weight $W_{WLS}$ as:

$$W_{WLS,\ max} = \frac{\sum_{i=1}^{m} C_{AP}(i)}{C_{NT}}$$

**General case**

In case of normal flow with requests of heterogeneous bit-rates, let $r_{i;j}$ be the bit-rate requested by the j-th wireless user connected to the i-th AP ($1 \leq i \leq m$, $1 \leq j \leq N_i$) and $r_k$ be the bit-rate requested by the k-th wireline user ($1 \leq k \leq N-m$). In a general scenario, the bit-rate requested by each source is heterogeneous, i.e., some users (be it wireless or wireline) may request less than the fair share, i.e., $r_{i;j} < r_0$, (or $r_k < r_0$), while some may request more. In a fine-tuning system, it makes no sense to over-dimension the weight to those users who do not need that much bandwidth.

Therefore, the actual requesting bit-rate of the wireline users (7) and wireless users (8) has to be taken into account when assigning the queue weights $W_{WLN}$ and $W_{WLS}$. Note that $r_{i;j}$ and $r_k$ does not have to be an instantaneous bit-rate of a wireless or wireline user. The traffic prediction module (2) determines the average bit-rate of a user within an optimal time interval, to avoid frequent weight adjustment with enhanced system stability. The weights assigned to the WLS and WLN queue are:

$$W_{WLS} = \frac{C_{WLS}}{C_{WLS} + C_{WLN}}$$

$$W_{WLN} = \frac{C_{WLN}}{C_{WLS} + C_{WLN}}$$

where $C_{WLS} = \sum_{i=1}^{m} \sum_{j=1}^{N_i} r_{i;j}$ and $C_{WLN} = \sum_{k=1}^{N-m} r_k$. Analogous as in the worst-case scenario, there exists an upper bound for $W_{WLS}$, as being confined by the physical link capacity of the wireless AP.

With two parallel queues defined per service class (44) the traffic from wireless logical ports (33,34) is forwarded to a WLS queue (41), while the traffic from WLN logical ports (31,32) is forwarded to a WLN queue (40). Preferably, the two traffic types are forwarded to their respective queues using one of the following techniques:

- allocating separate VLANs to WLN and WLS traffic.
- identifying the traffic per flow and forwarding the packets in WLN flows to WLN queues, while forwarding packets of WLS flows to WLS queues.
- forwarding the traffic per physical input port to a WLN or WLS queue.

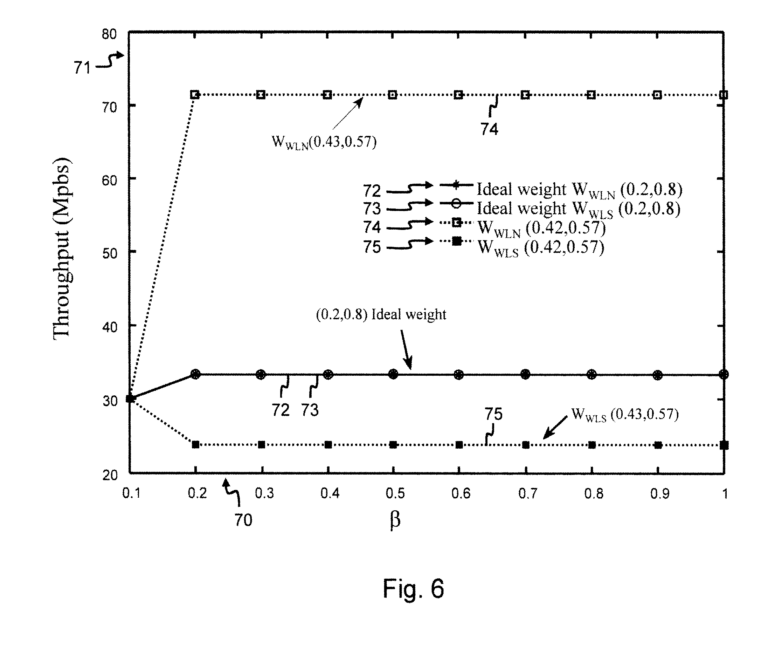

Fig. 6 shows a graph illustrating possible throughput (71) of wireline and wireless users (7,8) for an AN (1) as in embodiment 1. The figure illustrates the gain by utilizing the dynamic resource scheduler (4) in terms of improved fairness and QoE. The network parameters are: 16 physical ports (21-24) with one port dedicated to an AP (6), connected with 60 wireless users (8), total link capacity $C_{NT}$=2.5Gbps. Assuming greedy flows at each competing source, i.e. each source tries to compete for as much link capacity as they can. With the proposed scheduling methodology, an ideal weight is determined as 20% to wireline users (7) and 80% to wireless users (8). Both wireline users (7) and wireless users (8) are able to obtain an equal share of the available link capacity (i.e. $r_0$=33.3Mbps) with improved QoE for the nomadic wireless users (8). A mis-configuration of the queue weights, e.g. 43% to wireline users (7) while 57% to wireless users (8), lead to unfairness and impairs the performance of the wireless users (8).

Embodiment 2

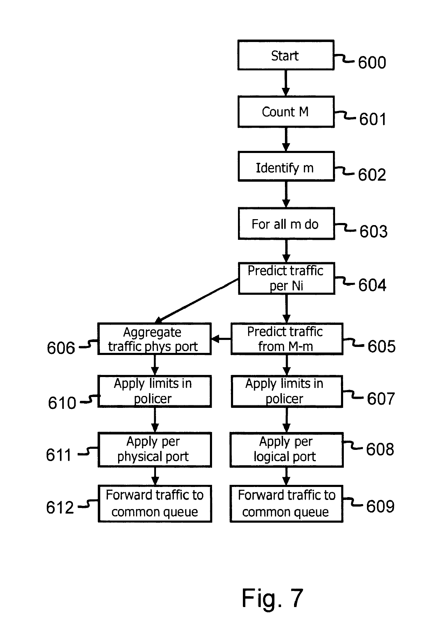

Fig. 7 shows a flow chart of traffic handling by an access node device (1) in e.g. an AN system of Fig.3, according to an embodiment of underlying disclosure.

The first steps concern the start of traffic handling (step 600), count M (step 601) and identify m (step 602). For all m the following is done (step 603): wireless traffic is predicted per $N_i$ (step 604), wireline traffic is predicted (step 605) and traffic is aggregated (step 606). Subsequently, limits are applied in steps 607 and 610, and respectively applied per logical port (step 608) and per physical port (step 611) in order to forward the traffic to a common queue in steps 609 and 612.

The adjustment function can be realized by policing traffic directly on the physical ports (21-24) or logical ports (31-34). In this embodiment, the scheduler (4) and the number of queues are not affected, while the weighting factor is the proportionality factor for setting up the policer throughput in relation to the available link capacity.

As in embodiment 1, the control plane of a classic AN identifies the physical ports (21-24) connecting APs (cfr. WLS logical ports) and CPE (cfr. WLN logical ports). The traffic prediction module (2) identifies the number of subscribers (7,8). Subsequently, two cases if policer granularity are considered, i.e. (A) per physical port (21-24) and (B) per logical port (31-34).

(A) For the policer granularity per physical port (21-24), the traffic limits for WLN ports are calculated as:

$$\frac{1}{\sum_{i=1}^{m} N_i + M - m} * C_{NT}$$

The limits for WLS ports are calculated as (for port i):

$$\frac{N_i}{\sum_{i=1}^{m} N_i + M - m} * C_{NT}$$

(B) For policer granularity per logical port (31-34), each logical port is allocated the same traffic limit:

$$\frac{1}{\sum_{i=1}^{m} N_i + M - m} * C_{NT}$$

Alternatively, the number of wireless users (8) and wireline users (7), can be replaced by the volume of traffic generated by respective WLS and WLN logical ports (31-34). The traffic volume can be measured, e.g. by attaching bit counters to each of the packets flows and aggregating the values over a fixed period of time. The volumes of traffic are subsequently used for calculating the multiplier values for policer limits.

The alternatives resemble the worst and general network scenarios discussed in embodiment 1, where the per port policer granularity is bounded by the physical link capacity $C_{AP}(i)$ on the wireless AP.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. It is to be understood that the terms so used are interchangeable under appropriate circumstances and embodiments of the invention are capable of operating according to the present invention in other sequences, or in orientations different from the one(s) described or illustrated above.

**Claims**

1. Access node device (1) for managing upstream network traffic, said device (1) comprising one or more wireline and/or wireless access line interfaces (10,11) for receiving resources from active wireline users (7) and wireless users (8), wherein said access node device (1) further comprises:

    - a traffic prediction module (2), adapted to predict upstream traffic pattern for said active wireline users (7) and wireless users (8);
    - a resource usage module (3), configured to detect insufficient link capacity for forwarding said received resources;
    - a dynamic resource scheduler (4), adapted to adjust upstream traffic when insufficient link capacity is detected by said resource usage module, wherein said upstream traffic is adjusted by allocating a substantially equal share of link capacity to said active wireline users (7) and wireless users (8) based on said predicted upstream traffic pattern.

2. Access node device (1) according to claim 1, wherein said upstream traffic pattern corresponds to the amount of active wireline users (7) and the amount of wireless users (8).

3. Access node device (1) according to claim 1, wherein said upstream traffic pattern corresponds to requested bit-rates per individual user (7,8).

4. Access node device (1) according to claim 1, wherein said upstream traffic pattern corresponds to average requested bit-rates per individual user (7,8) during a predetermined time interval.

5. Access node device (1) according to claim 1, wherein said resource usage module (3) is configured to detect insufficient link capacity for said access node device (1) based on the predicted and/or current upstream traffic pattern for said active wireline (7) and wireless users (8).

6. Access node device (1) according to claim 1, wherein in case of sufficient link capacity, said dynamic resource scheduler (4) is configured to grant bit-rate requests from users (7,8).

7. Access node device (1) according to claim 1, wherein said dynamic resource scheduler (4) is adapted to forward traffic from wireline users (7) and wireless users (8) via separate queues (40,41), wherein a queue weight $W_{WLN}$ is assigned for the queues (40) corresponding to wireline traffic and wherein a queue weight $W_{WLS}$ is assigned for the queues (41) corresponding to wireless traffic.

8. Access node device (1) according to claim 7, wherein said dynamic resource scheduler (4) is adapted to forward traffic from wireline users (7) and wireless users (8) via one or more pairs of separate queues (40,41), wherein each pair corresponds to a service class (44) and wherein a queue weight $W_{WLN}$ is assigned for the first queue (40) of a pair corresponding to wireline traffic and wherein a queue weight $W_{WLS}$ is assigned for the second queue (41) of a pair corresponding to wireless traffic.

9. Access node device (1) according to claim 7, wherein said $W_{WLN}$ weight is determined based on the ratio between the amount of active wireline users (7) and the total amount of active users (7,8), and wherein said $W_{WLS}$ weight is determined based on the ratio between the amount of active wireless users (8) and the total amount of active users (7,8).

10. Access node device (1) according to claim 7, wherein said $W_{WLN}$ weight is determined based on the ratio between the bit-rate requested by the active wireline users (7) and the total bit-rate requested by the active users (7,8), and wherein said $W_{WLS}$ weight is determined based on the ratio between the bit-rate requested by the active wireless users (8) and the total bit-rate requested by the active users (7,8).

11. Access node device (1) according to claim 1, wherein said dynamic resource scheduler (4) is adapted to impose per physical port (21-24) a traffic limit substantially equal to the product of the amount of active users (7,8) connected to the corresponding physical port with the ratio between the total link capacity $C_{NT}$ and the total amount of active users (7,8).

12. Access node device (1) according to claim 1, wherein said dynamic resource scheduler (4) is adapted to impose per logical port (31-34) a traffic limit substantially equal to the ratio between the total link capacity $C_{NT}$ and the total amount of active users (7,8).

13. Access node device (1) according to claim 1, wherein said wireline users (7) are connected to said AN device (1) via a CPE (5).

14. Access node device (1) according to claim 1, wherein said wireless users (8) are connected to said AN device (1) via an AP (6) and a CPE (5).

15. Method for managing upstream network traffic, said method comprising:

   - receiving resources from active wireline users (7) and wireless users (8);
   - predict upstream traffic pattern for said active wireline users (7) and wireless users (8);
   - detect insufficient link capacity for forwarding said received resources; and
   - adjust upstream traffic when insufficient link capacity ,is detected by allocating a substantially equal share of link capacity to said active wireline users (7) and wireless users (8) based on said predicted upstream traffic pattern.

Fig. 1

Fig. 2

Fig. 3

Fig. 4

EP 3 065 502 A1

```
                    ┌──────────────┐
                    │    Start     │──┐ 500
                    └──────────────┘
                           │
                           ▼
                    ┌──────────────┐
                    │   Count M    │──┐ 501
                    └──────────────┘
                           │
                           ▼
                    ┌──────────────┐
                    │  Identify m  │──┐ 502
                    └──────────────┘
                           │
                           ▼
                    ┌──────────────┐
                    │  For all m do│──┐ 503
                    └──────────────┘
                      ╱          ╲
                     ╱            ╲
          ┌─────────────────┐   ┌──────────────┐
   504 ┌──│ Predict traffic │   │   Count Ni   │──┐ 506
         │   from Σ Ni      │   └──────────────┘
         └─────────────────┘
                 │
                 ▼
          ┌─────────────────┐
   505 ┌──│ Predict traffic │
         │   from M-m       │
         └─────────────────┘
                     ╲            ╱
                      ╲          ╱
                    ┌──────────────┐
                    │  Calculate   │──┐ 507
                    │ W_WLN / W_WLS│
                    └──────────────┘
                           │
                           ▼
                    ┌──────────────┐
                    │ Apply weights│──┐ 508
                    │ in scheduler │
                    └──────────────┘
                           │
                           ▼
                    ┌──────────────┐
                    │Forward traffic to│──┐ 509
                    │ WLN/WLS queue│
                    └──────────────┘
```

Fig. 5

Fig. 6

```
                          ┌──────────┐
                          │  Start   │──┐ 600
                          └──────────┘  
                                │
                                ▼
                          ┌──────────┐
                          │ Count M  │──┐ 601
                          └──────────┘
                                │
                                ▼
                          ┌──────────┐
                          │ Identify m│──┐ 602
                          └──────────┘
                                │
                                ▼
                          ┌──────────┐
                          │For all m do│──┐ 603
                          └──────────┘
                                │
                                ▼
                          ┌──────────┐
                          │Predict traffic│──┐ 604
                          │  per Ni   │
                          └──────────┘
```

Aggregate traffic phys port — 606          Predict traffic from M-m — 605

Apply limits in policer — 610          Apply limits in policer — 607

Apply per physical port — 611          Apply per logical port — 608

Forward traffic to common queue — 612          Forward traffic to common queue — 609

Fig. 7

**Europäisches Patentamt**
**European Patent Office**
**Office européen des brevets**

# EUROPEAN SEARCH REPORT

Application Number

EP 15 29 0055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 355 452 A1 (CIT ALCATEL [FR]) 22 October 2003 (2003-10-22) * abstract * * paragraph [0007] - paragraph [0018] * * claims 1-10 * | 1-15 | INV. H04W88/10 |
| X | EP 1 708 446 A1 (LUCENT TECHNOLOGIES INC [US]; LUCENT TECH NETWORK SYS GMBH [DE]) 4 October 2006 (2006-10-04) * paragraph [0013] - paragraph [0017] * * paragraph [0052] - paragraph [0055] * * claims 1-10 * | 1-15 | |
| A | US 2004/085909 A1 (SOLIMAN SAMIR S [US]) 6 May 2004 (2004-05-06) * paragraph [0028] - paragraph [0031] * * paragraph [0049] - paragraph [0051] * * paragraph [0057] * * claims 1-23 * | 1-15 | |

TECHNICAL FIELDS
SEARCHED (IPC)

H04W

The present search report has been drawn up for all claims

| Place of search | Date of completion of the search | Examiner |
|---|---|---|
| The Hague | 12 May 2015 | Chassatte, Rémy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 29 0055

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2015

| Patent document cited in search report | | | Publication date | Patent family member(s) | | | Publication date |
|---|---|---|---|---|---|---|---|
| EP | 1355452 | A1 | 22-10-2003 | AT | 284104 | T | 15-12-2004 |
| | | | | DE | 60202129 | D1 | 05-01-2005 |
| | | | | DE | 60202129 | T2 | 07-04-2005 |
| | | | | EP | 1355452 | A1 | 22-10-2003 |
| | | | | US | 2003198249 | A1 | 23-10-2003 |
| EP | 1708446 | A1 | 04-10-2006 | NONE | | | |
| US | 2004085909 | A1 | 06-05-2004 | AU | 2003287295 | A1 | 07-06-2004 |
| | | | | TW | 200420164 | A | 01-10-2004 |
| | | | | US | 2004085909 | A1 | 06-05-2004 |
| | | | | WO | 2004043088 | A2 | 21-05-2004 |

EPO FORM P0459

For more details about this annex : see Official Journal of the European Patent Office, No. 12/82